(19) Europäisches Patentamt
European Patent Office
Office européen des brevets

(11) EP 1 070 526 A2

(12) **EUROPEAN PATENT APPLICATION**

(43) Date of publication:
**24.01.2001 Bulletin 2001/04**

(21) Application number: **00305832.8**

(22) Date of filing: **11.07.2000**

(51) Int. Cl.[7]: **B01D 19/04**, C11D 3/37, C11D 3/20, C11D 3/36, C11D 3/12

(84) Designated Contracting States:
**AT BE CH CY DE DK ES FI FR GB GR IE IT LI LU MC NL PT SE**
Designated Extension States:
**AL LT LV MK RO SI**

(30) Priority: **23.07.1999 GB 9917331**

(71) Applicant: **DOW CORNING S.A.**
**B-7180 Seneffe (BE)**

(72) Inventors:
- **Hoogland, Jan**
**1170 Brussels (BE)**
- **Colson, Anick**
**5000 Namur (BE)**

(74) Representative:
**Davies, Peter Vaughan**
**Dow Corning Limited,**
**Intellectual Property Department,**
**Cardiff Road**
**Barry, CF63 2YL (GB)**

(54) **Foam control agents**

(57) A foam control agent comprises a homogeneous mixture of an organopolysiloxane (A) and a stabilising aid (B) containig a finely divided hydrophobic filler (C ) at 0.1 to 15% by weight. The siloxane units of (A) consist essentially of 0 to 60% of units of the general formula (i) $R_aSiO_{(4-a/2)}$ wherein R denotes a hydrocarbon group having up to 8 carbon atoms and a has a value of from 0 to 3, and 40 to 100% of units of the general formula (ii) $R_bR''_cSiO_{(4-b-c/2)}$ wherein R'' denotes a group -$Z_z$-R', wherein R' denotes an alkyl group having from 9 to 35 carbon atoms, Z denotes a linking group between silicon and R' and *z* has a value of 0 or 1, *b* has a value of 0, 1 or 2, *c* has a value of 1 or 2, and *b+c* has a value of 1, 2 or 3, provided more than 70% by weight of the carbon content of the organopolysiloxane is due to the groups R''. (B) has a melting point of 40 to 80°C and preferably is a fatty acid, a fatty alcohol, and an alkylphosphoric acid of the formula:-

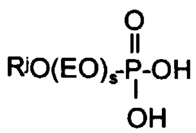

wherein $R^j$ is a linear or branched alkyl or alkenyl group containing from 12 to 24 carbon atoms EO represents ethylene oxide and *s* is zero, 1 or 2. (B) in its liquid form is preferably miscible with the organopolysiloxane (A) so as to form a homogeneous liquid which upon cooling forms a monophasic waxy substance.

EP 1 070 526 A2

## Description

This invention relates to foam control agents with improved storage stabilities and powdered detergents containing the aforesaid foam control agents.

Powdered chemical cleaners, comprising detergents and anionic and/or nonionic surfactants and their uses in the cleaning of soiled fabrics are well-known. These cleaners can, however, give rise to excessive foaming during washing particularly when used in automatic drum type washing machines. This excessive foaming may reduce the efficient cleaning of the fabrics and may cause overflowing and leakage from the washing machines. There are now a wide range of foam control agents used to control these foaming problems. In particular there are a wide range of silicone based foam control agents. However, one major problem which still largely remains is the long term stabilisation of such foam control agents in powdered chemical cleaners.

Whilst many foam control agents remain stable over periods of a few days, their long term storage stability is relatively poor as the foam control ability is significantly reduced over an extended period of time such as 2 to 3 months. Long term stabilisation has proved to be a particularly difficult problem to overcome in view of the fact that powdered chemical cleaners containing foam control agents are often kept in the vicinity of washing machines and may be sporadically subjected to elevated temperatures.

Typically, foam control agents are coated onto supports and the resulting coated support is then at least partially encapsulated or further coated in a water soluble or dispersible, non-surface active material which is also substantially unreactive with and/or impermeable to the cleaner.

In British patent No GB1523957 the foam control agent, typically a polydimethylsiloxane, was coated onto powdered or granular sodium tripolyphosphate, sodium sulphate or sodium perborate and was then at least partially enclosed in a water insoluble wax having a melting point of from 55 to 100°C. Examples of the wax include polyethylene wax, montan wax and carnauba wax.

European patent No EP 0210721 describes certain particulate foam control agents comprising 1 part by weight of a trimethylsilyl end blocked polydimethylsiloxane, and not less than one part by weight of a fatty acid or alcohol having a carbon chain containing from 12 to 20 carbon atoms and a melting point in the range of 45 to 80°C which is insoluble in water. The fatty acid and fatty alcohol used are exemplified as stearic acid and stearyl alcohol respectively. The foam control agent could also comprise a carrier such as sodium tripolyphosphate. In this case the polydimethylsiloxane and fatty acid or alcohol were mixed vigorously in their liquid form into a non-homogeneous mixture which is subsequently spray dried or coated on to carrier particles by way of a fluid bed.

It is well known in the art that polydimethylsiloxanes and fatty acids and alcohols are immiscible or inhomogeneous in their liquid form and as such they must be mixed vigorously. As soon as the mixing process is stopped the two liquids tend to separate out into two layers. It is extremely difficult to keep the liquids in a mixed form which is suitable for use as a foam control agent because of the complicated procedures which need to be utilised to provide suitable products.

EP0517298 comprises a granular foam control agent having a carrier material for example starch, kieselguhr or Fuller's earth, a trimethylsilyl terminated polydimethylsiloxane foam control agent, with or without solid silica, and a water insoluble organic coating material for example a fatty acid, fatty alcohol or fatty acid ester, preferably stearic acid or stearyl alcohol, and a crystalline or amorphous aluminosilicate at a weight ratio with the silicone foam control agent of from 1:5 to 2:1.

EP 0495345 describes a foam control agent having the same formulation as disclosed in EP0517298 but for the fact that the aluminosilicate is replaced by glycerol which it was believed improved the adsorption of the silicone foam control agent compound to carrier particles.

EP 0578424 describes a foam control agent which unlike the previous cases does not utilise a trimethylsilyl endblocked polydimethylsiloxane but contains an polydiorganosiloxane with alkyl side chains in which each alkyl side chain contains from 9 to 35 carbon atoms. The polydiorganosiloxane is used together with a finely divided hydrophobic particulate material, for example, hydrophobic silica and optionally an MQ organosilicon resin. This document specifically teaches that no carrier material, encapsulant or further coating was required.

We have now surprisingly found that the long term stability of foam control agents containing organopolysiloxanes with alkyl side chain having from 9 to 35 carbon atoms is significantly improved by using them in a composition with certain organic compounds.

A foam control agent composition according to the present invention comprises

(I) a homogeneous mixture of :-

(A) an organopolysiloxane of which the siloxane units consist essentially of 0 to 60% of units of the general formula (i) $R_aSiO_{(4-a/2)}$ wherein R denotes a hydrocarbon group having up to 8 carbon atoms and *a* has a value of from 0 to 3, and 40 to 100% of units of the general formula (ii) $R_bR''_cSiO_{(4-b-c/2)}$ wherein R'' denotes a group

$-Z_z-R'$, wherein R' denotes an alkyl group having from 9 to 35 carbon atoms, Z denotes a linking group between silicon and R' and *z* has a value of 0 or 1, *b* has a value of 0, 1 or 2, *c* has a value of 1 or 2, and *b*+*c* has a value of 1, 2 or 3, provided more than 70% by weight of the carbon content of the organopolysiloxane is due to the groups R"; and

(B) a stabilizing aid which is an organic compound having a melting point of from about 40 to 80°C, containing

(II) a filler (C ) comprising at least one finely divided hydrophobic particulate material in an amount of from 0.1 to 15 % by weight of (A) + (B) + (C) .

The stabilising aid (B) is usually a compound which in its liquid form is miscible with the organopolysiloxane (A) so as to form a homogeneous liquid which upon cooling forms a monophasic wax-like substance.

The stabilising aid (B) preferably comprises one or more of the group consisting of a fatty acid, a fatty alcohol, and an alkylphosphoric acid of the formula :-

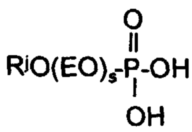

wherein $R^j$ is a linear or branched alkyl or alkenyl group containing from 12 to 24 carbon atoms EO represents ethylene oxide and *s* is zero, 1 or 2.

Organopolysiloxanes (A) which are useful in the composition of the present invention preferably comprise a majority of units of the formula (ii), although they may also have some units of formula (i). Preferred organopolysiloxanes (A) are those where from 40 to 100% of all units are units of formula (ii), more preferably 60 to 100%. It is also preferred that the value of a in formula (i) and the value of *b*+*c* in formula (ii) is 2 for the majority of units, making organopolysiloxane (A) predominantly linear.

Preferably predominantly linear organopolysiloxane (A) is end-capped with siloxane units wherein a or *b*+*c* has a value of 3. It is, however, also possible that one of the substituents of the terminal siloxane unit in the preferred organopolysiloxanes is a hydroxyl group or an alkoxy group, having 1 to 6 carbon atoms. Thus preferred organopolysiloxanes (A) are polydiorganosiloxanes (A') with the general structure

$$R_bR^{\circ}_cSi\text{-}O\text{-}[RR''Si\text{-}O)_x\text{-}[(R)_2Si\text{-}O]_y\text{-}SiR_b\,R^{\circ}_c$$

wherein R,R", *b*, *c* and *b* + *c* are as defined above, R° denotes either a group R or a group R", and *x* and *y* each independently denote an integer. The values of *x* and *y* are not crucial providing they fall within the ranges defined above for organopolysiloxane (A). They may range from 0 to many hundreds, giving polymers with a viscosity which may be very low or very high, even up to many thousands of $mm^2/s$. It is required, however, that the molecule fulfils the conditions set out above with regard to the percentage of units having a group R". Preferred however are those polymers where the total chain length ($x + y + 2$) includes from about 40 to about 500 units, most preferably 60 to 400 units.

It is also required that the organopolysiloxanes (A) have a carbon content where more than 70% by weight is due to presence of groups R". More preferably the carbon content attributed to the groups R" is at least 75%, most preferably from 80 to 90% by weight. This can be achieved by several means. It is possible to use R' groups which are long chain alkyl groups. Alternatively, or in conjunction, it is possible to allow a high proportion of units of formula (ii) in the siloxane polymer.

Preferred R' groups are those which have a carbon chain of from 10 to 24, more preferably 10 to 20. Examples of suitable groups R' are dodecyl, tetradecyl, octadecyl and eicosyl. The groups R denote hydrocarbon groups with up to 8 carbon atoms. These may be for example alkyl, aryl, alkenyl, alkylaryl, arylalkyl or alkynyl groups. Preferably at least 50% and more preferably 80% of all R groups are alkyl groups. It is particularly preferred that the R groups are methyl or ethyl groups, most preferably methyl.

Z may be one of a number of divalent linking groups, consisting of O or C, H and optionally O, N, S or P atoms or C, H, O and optionally N, S or P atoms. Oxygen, when present, would be in the form of an ether oxygen, an ester oxygen or a substituted hydroxyl or alkoxy group. Nitrogen, when present, would be in the form of amino groups or, if present, with oxygen in the form of an amido group. Suitable examples of Z groups include alkylene ester groups, alkylene ether groups, amide groups, polyamino/ amido groups and mercapto groups, for example

$-O-$, $-CH_2CH_2O-C(=O)-$, $-CH_2CH_2O-CH_2-CH(OH)-$, $-(CH_2)_3NHC(=O)-$, $-(CH_2)_3NH-CH_2-C(=O)-$, $-CH_2CH_2S-$ and

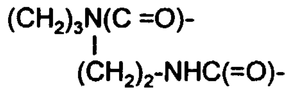

However, it is preferred for the present invention that *z* is 0 and therefore that the group Z is absent. In a most preferred structure the organopolysiloxanes (A) are polydiorganosiloxanes (A') with the following formula:-

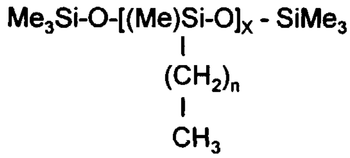

where *x* is from 50 to 100 and each *n* (i.e. R'-1) is an integer between 9 and 19, most preferably each n is the same integer between 14 and 19.

It has also been found that in addition to improved storage stability altering the value of *n* may lead to reduction in the amount of foam control agent required, for example it has been found that when *n*=17 a two or three times reduction in the amount of foam control agent needed as compared to traditional polydimethylsiloxane foam control agents, particularly with respect to detergent formulations which generate high levels of foam.

Polydiorganosiloxanes (A') may be prepared by any appropriate method, including for example the methods discussed in EP 0578424.

The stabilizing aid (B) has a melting point of from about 40 to 80°C at atmospheric pressure. The fatty acid may, for example be stearic acid, palmitic acid or myristic acid. The fatty alcohol may for example be stearyl alcohol or palmityl alcohol. The alkylphosphoric acid may for example be of the above formula where R is a $C_{12}$ alkyl group and *s* is 0, which is sold under the Trade mark PHOSPHOLAN ALF 5. Mixtures of the above materials can be used. Optionally one or more of a petroleum jelly or a paraffin wax, for example, Vaseline® may be added to stabilizing aid (B). Stabilizing aid B can for example comprise stearyl alcohol and PHOSPHOLAN ALF 5 and have vaseline and/or petroleum jelly present.

Filler (C) may be selected from any one or more of the group of an organosilicon resin consisting essentially of triorganosiloxane groups and $SiO_{4/2}$ groups, silica, titania, alumina, ground quartz, magnesium oxide, zinc oxide, salts of aliphatic carboxylic acids, e.g. calcium or aluminium stearates, reaction products of isocyanates with certain materials, for example cyclohexylamine and alkyl amides, e.g. ethylene or methylene bis stearamide.

Preferably filler (C) comprises silica particles, especially those having an average particle size of from 0.1 to 50 μ, preferably from 1 to 20 μ and a surface area of at least 50 $m^2/g$. These silica particles can be rendered hydrophobic e.g. by treating them with dialkylsilyl groups and/or trialkylsilyl groups either bonded directly onto the silica or by means of a silicone resin. We prefer to employ a silica the particles of which have been rendered hydrophobic with dimethyl and/or trimethylsilyl groups. Suitable silica materials include fumed silica, precipitated silica, hydro-thermal silica and gel formation silica.

The filler (C) may alternatively or additionally comprise an MQ resin consisting essentially and preferably only, of monofunctional groups of the formula $R_3SiO_{1/2}$ and tetrafunctional groups $SiO_{4/2}$ although minor amounts of difunctional or trifunctional siloxane groups may also be present. A small number of the silicon-bonded substituents may also be hydroxyl or alkoxy groups, but this should not exceed 3% of all silicon bonded substituents. R is as defined above but it is preferred that the group R is a lower alkyl (i.e. $C_{1-3}$) group, most preferably methyl. The ratio of monofunctional to tetrafunctional units is preferably in the range of from 0.5:1 to 1:1, most preferably about 0.65:1. The presence of this ingredient tends to improve the efficiency of the foam control agent. It is preferred that the total amount of filler (C), for example MQ resin + silica particles, is from 3 to 15 weight % of (A) + (B) + (C) , most preferably 5 to 11 weight %.

Whilst the addition of 1% by weight of the stabilizing aid (B) ( based on (A) + (B) + (C) ), into the organopolysiloxane (A) and filler (C) provides an improvement in long term stability, it is preferred that a minimum of 15% by weight of the stabilizing aid (B) is present in a foam control agent composition according to the invention.

The preferred weight % range of the three essential components is:-

from 40 to 70% by weight of organopolysiloxane(A);
from 25 to 50% by weight of stabilizing aid (B); and
from 5 -11 % by weight of filler (C).

Additional optional components for the foam control agent may include thickeners, e.g. polyvinyl alcohol, aluminium stearate, monoglycerides, triglycerides, treated silicas, microcrystalline waxes, dispersing agents, levelling agents, wetting agents, inorganic salts, viscosity regulators, preservatives, rust inhibitors, antioxidants and pH modifiers. Although the foam control agents are preferably used as the only such agent present they may also be used in combination with other foam control agents, e.g. stearate soaps.

The foam control agent may be used alone or may be used by incorporation in and/or on solid carriers to form a supported foam control agent.

An appropriate carrier may comprise any suitable material but conveniently may be an ingredient or component part of a detergent composition. The carriers utilised to form supported foam control agents are intended to provide a solid basis on which the foam control agent may be deposited during manufacture. The supported foam control agent may thus be a free flowing powder at room temperature and may therefore be easily mixed into a detergent composition in powder form. The carrier also bulks up the supported foam control agent to facilitate the dispersability of the supported foam control agent in powdered detergent. Even distribution of the supported foam control agent in the detergent composition is important since it is desirable that every unit-measure of the detergent composition used contains sufficient foam control agent to stop excessive foam formation even though the foam control agent may be employed at levels below 1% by weight of the total detergent composition. Preferably the carrier is in the form of a water soluble solid powder material which facilitates dispersion of the foam control agent in aqueous liquor during the wash cycle. It is most suitable to choose carrier particles or granules or the like which themselves play an active role in the laundering or washing process. Examples of such materials are sodium sulphate, sodium carbonate, sodium citrate, sodium tripolyphosphate and clay minerals. Such materials are useful as for example, builders, soil suspenders, diluents and/or softeners in the detergent composition. Preferred carrier particles for use in a supported foam control agent according to the invention are selected from sodium sulphate and sodium carbonate, most preferred being sodium carbonate.

The carrier may initially be in the form of small particles which may be combined with the remainder of the foam control agent and granulated.

In the event of carrier particles being incorporated in the foam control agent, it is preferred that the carrier particles comprise an amount of from 60 to 96% of the total weight of the supported foam control agent. Preferably from 70 to 95% of the total weight of the supported foam control agent comprises carrier.

The amount of foam control agent or supported foam control agent of the invention used in a detergent composition is generally from 0.02 to 25% by weight of the detergent composition. The foam control agent itself is preferably present at 0.02 to 2.5% of the detergent composition. The supported foam control agent is preferably present at 0.2 to 25% of the detergent composition.

A process for the preparation of a foam control agent according to the present invention comprises the following steps;-

i) mixing components (A) and (B) in their liquid form into a homogeneous liquid;
ii) adding component (C ) to either component (A) or (B) before mixing or to the homogeneous liquid during or after step (i), and
iii) enabling the homogeneous liquid resulting from steps (i) and (ii) to cool and form a homogeneous solid.

Preferably (C ) is added to (A) prior to the mixing step (i).

Where necessary one or both of (A) and (B) must be heated to a temperature above the melting point of the stabilizing aid (B) so that the two components may be mixed in their liquid form.

It is to be noted that when mixed with polydimethylsiloxanes, stabilizing aid (B) forms an inhomogeneous mixture in that immediately any mechanical mixing stops the two components commence separating out into distinct layers. However, when organopolysiloxane (A) and stabilizing aid (B) are mixed they form a stable homogeneous liquid which upon cooling forms a monophasic wax like substance. This wax like substance may then be used as the foam control agent per se or may be coated, impregnated or dispersed onto carrier particles to form a supported foam control agent. Alternatively, the homogeneous organopolysiloxane (A)/ stabilizing aid (B) mixture may, before cooling, be intermixed with carrier particles and granulated prior to or during the cooling stage. The filler (C) may be added to the organopolysiloxane (A), the stabilizing aid (B)or the resulting homogeneous liquid as required but is preferably added to the organopolysiloxane (A) prior to combination with the stabilizing aid (B).

The most important benefit of a foam control agent in accordance with the present invention is that it is stabilised and therefore retains its ability to be fully active when stored over extended periods of time instead of merely a few days.

A number of examples now follow in which all parts and percentages are by weight unless otherwise indicated.

Example 1

Preparation of Foam Control Agents

The average molecular formula of the polydiorganosiloxane (A') utilised in the following examples is of the formula:-

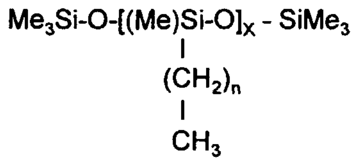

The average values of both *x* and *n* for the polydiorganosiloxane (A') tested are identified in the Tables below.

In this example each stabilizing aid (B) is either stearyl alcohol or stearic acid with the exception of the comparative samples Tabulated in Table 1b. The process by which the foam control agents were prepared is exemplified as follows:-

> 180g of a polydiorganosiloxane (A') was mixed with 10g of a precipitated silica treated with polydimethylsiloxane supplied by Degussa GmbH, and 10g of an silicone resin for 15 minutes at a low shear speed using a paddle type mixer and then for 5 minutes at high shear speed to achieve a dispersion of the solid phase in the polydiorganosiloxane (A'). Any air incorporated in the second mixing step was removed by applying a vacuum to the sample for 1 hour.
>
> 28.8g of stearyl alcohol was added to 43g of the polydiorganosiloxane (A')/silica/resin mixture and the whole was heated to a temperature of around 60°C and mixed/stirred for about 20 minutes whilst the temperature was maintained at 60°C thereby forming a homogeneous liquid. In the event that foam control agent is to be used without support it is allowed to cool.

However, to make a supported foam control agent, the homogeneous liquid was subsequently poured onto 228.2g of low density grade sodium carbonate. The liquid and sodium carbonate was then granulated using a Kenwood(R) kitchen mixer and the resulting granulate mixture was cooled.

A selection of supported foam control agent compositions were prepared by the above method. The amount by weight % of each component present in the resulting supported foam control agents are provided in Table 1a.

Table 1a

| Foam Control Agent Compositions | | | | | | | |
|---|---|---|---|---|---|---|---|
| Sample | A | B | C | D | E | F | G |
| **CARRIERS** | | | | | | | |
| Sodium carbonate | 90 | 90 | 90 | | | | 90 |
| sodium sulphate | | | | | 90 | 90 | |
| Zeolite | | | | 70 | | | |
| **FILLER (C)** | | | | | | | |
| Resin | 0.5 | 0.8 | 0.5 | 1.5 | 0.5 | 0.5 | 0.5 |
| Sipernat® D10 Silica | 0.5 | 0.2 | 0.5 | 1.5 | 0.5 | 0.5 | 0.5 |
| **Polydiorganosiloxane (A') fluid** | | | | | | | |
| *n*=15 & *x*=60 | 4.0 | 4.0 | | 12.0 | 4.0 | 5.5 | 7.0 |
| *n*=17 & *x*=60 | | | 4.0 | | | | |
| **STABILIZING AID (B)** | | | | | | | |
| stearyl alcohol | 5.0 | 5.0 | 5.0 | 15.0 | 5.0 | 3.5 | |
| stearic acid | | | | | | | 2.0 |

Four comparative foam control agents, A1 D1 F1 and G1 were prepared and comprise the same amount by weight of the alkylmethylsiloxane, silica and resin as in examples A D F and G respectively but the stabilizing aid (B) was replaced by the inclusion of further carrier into the composition .

Table 1b

| Comparative Foam Control Agent Compositions | | | | |
|---|---|---|---|---|
| Sample | A1 | D1 | F1 | G1 |
| **CARRIERS** | | | | |
| Sodium carbonate | 95 | | | 93 |
| sodium sulphate | | | 93.5 | |
| Zeolite | | 85 | | |
| **FILLER (C)** | | | | |
| Resin | 0.5 | 1.5 | 0.5 | 0.5 |
| Sipernat® D10 Silica | 0.5 | 1.5 | 0.5 | 0.5 |
| **Polydiorganosiloxane (A') fluid** | | | | |
| *n*=15 & *x*=60 | 4.0 | 12.0 | 5.5 | 6.0 |
| **STABILIZING AID (B)** | | | | |
| stearyl alcohol | 0 | 0 | 0 | |
| stearic acid | | | | 0 |

Testing of the Supported Foam Control Agents in Detergent Compositions

Foam control efficiency was tested in a front loading washing machine (Miele® 715) using a 3.5kg load of clean cotton pillow cases, and a washing cycle of 40°C. About 130g of a detergent composition comprising sodium zeolite, sodium sulphate, sodium silicate, sodium carbonate, a polycarboxylate polymer (sold under the name of Sokalan® CP5), sodium alkyl benzyl sulphonate, sodium perborate, tetra acetic ethylendiamine (TAED), soap and a non-ionic surfactant was used in combination with 1.95g of the relevant supported foam control agent as disclosed in Tables 1a and 1b (1.5% by weight of the detergent loaded).

The height of the foam resulting from each washing load in accordance with the above conditions (Foam height) was measured as follows:-

The door of the washing machine was transparent and marked with a scale of from 0 to 100 where 0 represents no foam and 100 represents a full height of foam, the scale being divided into intervals of 10. During the wash cycle the foam height was measured every 5 minutes with the aid of a video camera.

Samples of detergent + particulate foam control agent were prepared in duplicate or triplicate sets and measurements were taken immediately as shown below in Table 1c and after a period of 8 weeks of ageing stored in open-topped containers in humidity chamber set to 70% relative humidity at a temperature of 35°C, as shown in Table 1d.

A simple comparison of the results provided in Tables 1c and 1d indicate that after a period of 8 weeks detergent samples containing foam control agent compositions in accordance with the present invention maintain a lower level of foam during a washing cycle as opposed to the comparative examples despite the fact that results on the immediately used samples are similar.

Hence whilst the foam control agent nature of compositions in accordance with the present invention is maintained over a period of 8 weeks and indeed in some cases is improved, the foam control agent effect of the comparative samples have become negligible after only a very short period of time in the was cycle (10 minutes).

Table 1c

| Results of Detergent/foam control agent compositions defined in Tables 1a and 1b measured without ageing (% height of foam in washing machine window) | | | | | | | | | | | |
|---|---|---|---|---|---|---|---|---|---|---|---|
| | Time/Minutes | | | | | | | | | | |
| Sample | **0** | **5** | **10** | **15** | **20** | **25** | **30** | **35** | **40** | **45** | **50** |
| A | 0 | 50 | 10 | 10 | 20 | 20 | 30 | 30 | 40 | 40 | 40 |
| B | 0 | 90 | 20 | 20 | 20 | 30 | 30 | 30 | 40 | 40 | 50 |
| C | 0 | 100 | 80 | 40 | 40 | 30 | 40 | 40 | 40 | 50 | 60 |
| D | 0 | 100 | 70 | 70 | 70 | 60 | 60 | 60 | 60 | 60 | 60 |
| E | 0 | 90 | 30 | 30 | 30 | 30 | 30 | 40 | 40 | 40 | 40 |
| F | 0 | 30 | 0 | 0 | 10 | 20 | 30 | 30 | 30 | 40 | 40 |
| G | 0 | 90 | 20 | 20 | 30 | 30 | 30 | 30 | 40 | 40 | 40 |
| | | | | | | | | | | | |
| A1 | 0 | 0 | 10 | 20 | 30 | 30 | 30 | 30 | 30 | 40 | 40 |
| D1 | 0 | 30 | 20 | 20 | 40 | 40 | 40 | 40 | 50 | 50 | 50 |
| F1 | 0 | 0 | 0 | 10 | 20 | 30 | 30 | 30 | 40 | 40 | 40 |
| G1 | 0 | 0 | 10 | 20 | 20 | 30 | 30 | 30 | 40 | 40 | 40 |

Table 1d

| Results of Detergent/foam control agent compositions measured after ageing for a period of eight weeks(% height of foam in washing machine window) | | | | | | | | | | | |
|---|---|---|---|---|---|---|---|---|---|---|---|
| | Time/Minutes | | | | | | | | | | |
| **Sample** | **0** | **5** | **10** | **15** | **20** | **25** | **30** | **35** | **40** | **45** | **50** |
| A | 0 | 100 | 30 | 20 | 20 | 20 | 20 | 30 | 30 | 30 | 30 |
| B | 0 | 90 | 30 | 30 | 30 | 30 | 40 | 40 | 40 | 50 | 50 |
| C | 0 | 90 | 80 | 30 | 40 | 40 | 40 | 40 | 40 | 50 | 60 |
| D | 0 | 70 | 60 | 80 | 80 | 80 | 80 | 80 | 90 | 90 | 90 |
| E | 0 | 60 | 30 | 20 | 20 | 30 | 30 | 30 | 40 | 40 | 40 |
| F | 0 | 50 | 20 | 10 | 20 | 20 | 20 | 30 | 30 | 40 | 40 |
| G | 0 | 80 | 20 | 20 | 20 | 30 | 30 | 30 | 30 | 40 | 40 |
| | | | | | | | | | | | |
| A1 | 0 | 40 | 80 | 100 | 100 | 100 | 100 | 100 | 100 | 100 | 100 |
| D1 | 0 | 100 | 100 | 100 | 100 | 100 | 100 | 100 | 100 | 100 | 100 |
| F1 | 0 | 30 | 60 | 100 | 100 | 100 | 100 | 100 | 100 | 100 | 100 |
| G1 | 0 | 40 | 80 | 100 | 100 | 100 | 100 | 100 | 100 | 100 | 100 |

Example 2

In this example the stabilizing aid (B)comprises a mixture of PHOSPHOLAN ALF 5 (ALF 5) together with either petroleum jelly or stearyl alcohol.

Preparation of Supported Foam Control Agents

These samples were prepared using a method analogous to that described in Example 1 and the compositions are provided in following Table 2a.

Table 2a

| Supported Foam Control Agent Compositions | | | | | | | |
|---|---|---|---|---|---|---|---|
| Sample | H | J | K | L | M | N | R |
| **CARRIERS** | | | | | | | |
| Sodium carbonate | 90 | 90 | 91 | 73.7 | 72.7 | 72.7 | 70.0 |
| **FILLER (C)** | | | | | | | |
| Resin | 0.5 | 0.5 | 0.5 | 0 | 0.5 | 0 | 1.44 |
| ethyl bis stearamide | 0 | 0 | 0 | 0 | 0 | 1.0 | 0 |
| Sipernat® D10 Silica | 0.5 | 0.5 | 0.5 | 0 | 0.5 | 0 | 0.36 |
| **Polydiorganosiloxane (A') fluid** | | | | | | | |
| *n*=15 & *x*=60 | 5.0 | 5.0 | 5.0 | 14.3 | 14.3 | 14.3 | 0 |
| **n=17 & x=60** | 0 | 0 | 0 | 0 | 0 | 0 | 16.2 |
| **STABILIZING AID (B)** | | | | | | | |
| stearyl alcohol | 3.5 | 3.0 | 0 | 0 | 0 | 0 | 4.8 |
| petroleum jelly | 0 | 0 | 0 | 9.6 | 9.6 | 9.6 | 4.8 |
| ALF-5 | 0.5 | 1.0 | 3.0 | 2.4 | 3.4 | 3.4 | 2.4 |

Testing of the Supporting Foam Control Agents in Detergent Compositions

The samples were assessed using the same process as described in example 1. The results which were obtained for samples tested immediately are provided in Table 2b and the results obtained after ageing for eight weeks are provided in Table 2c below.

Table 2b

| Results of Detergent/ Supported Foam Control Agent Compositions measured without ageing (% height of foam in washing machine window) | | | | | | | | | | | |
|---|---|---|---|---|---|---|---|---|---|---|---|
| | Time/Minutes | | | | | | | | | | |
| **Sample** | **0** | **5** | **10** | **15** | **20** | **25** | **30** | **35** | **40** | **45** | **50** |
| H | 0 | 100 | 0 | 0 | 0 | 10 | 20 | 20 | 30 | 30 | 40 |
| J | 0 | 100 | 0 | 0 | 0 | 10 | 20 | 20 | 30 | 30 | 40 |
| K | 0 | 0 | 0 | 20 | 40 | 40 | 50 | 50 | 60 | 70 | 70 |
| L | 0 | 0 | 0 | 0 | 10 | 20 | 20 | 20 | 20 | 30 | 30 |
| M | 0 | 0 | 0 | 0 | 10 | 20 | 30 | 40 | 50 | 50 | 50 |
| N | 0 | 0 | 10 | 30 | 40 | 40 | 40 | 50 | 60 | 70 | 70 |
| R | 0 | 0 | 0 | 0 | 0 | 0 | 0 | 10 | 10 | 20 | 20 |

Table 2c

| Results of Detergent/ Supported Foam Control Agent Compositions measured after ageing for a period of eight weeks (% height of foam in washing machine window) | | | | | | | | | | | |
|---|---|---|---|---|---|---|---|---|---|---|---|
| | Time/Minutes | | | | | | | | | | |
| **Sample** | **0** | **5** | **10** | **15** | **20** | **25** | **30** | **35** | **40** | **45** | **50** |
| H | 0 | 70 | 30 | 30 | 30 | 40 | 50 | 60 | 60 | 60 | 60 |
| J | 0 | 90 | 40 | 30 | 30 | 40 | 50 | 50 | 60 | 60 | 60 |
| K | 0 | 40 | 40 | 30 | 50 | 50 | 60 | 70 | 80 | 80 | 100 |
| L | 0 | 0 | 0 | 30 | 40 | 40 | 50 | 80 | 90 | 90 | 100 |
| M | 0 | 10 | 10 | 10 | 20 | 40 | 50 | 50 | 50 | 50 | 50 |
| N | 0 | 0 | 20 | 30 | 40 | 50 | 50 | 60 | 90 | 90 | 90 |
| R | 0 | 0 | 0 | 0 | 0 | 0 | 10 | 10 | 10 | 20 | 20 |

Comparative Example 3

Further comparative results are shown below in result O, in which the stabilizing aid (B) was replaced wholly by a petroleum jelly and samples P and Q provide results wherein the organopolysiloxane used was a trimethylsilyl terminated polydimethylsiloxane which is inhomogeneous with the stabilizing aid (B)but was prepared by the method described in Example 1. It will be noted that in each of these examples the ageing results are poor after a period of only four weeks as compared to the full 8 weeks utilised in the samples of the present application.

Table 3a

| Comparative Foam Control Agent Compositions | | | |
|---|---|---|---|
| Samples | O | **P** | **Q** |
| **CARRIERS** | | | |
| Sodium carbonate | 90 | 70 | |
| Zeolite | | | 70 |
| **FILLER (C)** | | | |
| Resin | 0.5 | 0 | 0 |
| Cab-o-sil TS-530 silica | | 0.3 | 0.3 |
| Sipernat® D10 Silica | 0.5 | 0 | 0 |
| **Polydiorganosioxane (A') fluid** *n*=15 & *x*=60 | 4.0 | 0 | 0 |
| polydimethylsiloxane | 0 | 9.7 | 9.7 |
| **STABILIZING AID (B)** | | | |
| Petroleum Jelly | 5.0 | 0 | 0 |
| stearyl alcohol | | 20.0 | 20.0 |

Table 3b

| Results of Detergent/foam control agent compositions measured without ageing (% height of foam in washing machine window) | | | | | | | | | | | |
|---|---|---|---|---|---|---|---|---|---|---|---|
| | Time/Minutes | | | | | | | | | | |
| **Samples** | **0** | **5** | **10** | **15** | **20** | **25** | **30** | **35** | **40** | **45** | **50** |
| O | 0 | 50 | 40 | 30 | 30 | 30 | 40 | 50 | 60 | 70 | 70 |
| P | 0 | 30 | 50 | 80 | 100 | 100 | 100 | 100 | 100 | 100 | 100 |
| Q | 0 | 80 | 90 | 100 | 100 | 80 | 70 | 60 | 50 | 50 | 20 |

Table 3c

| Results of Detergent/foam control agent compositions measured after ageing for a period of four weeks (% height of foam in washing machine window) | | | | | | | | | | | |
|---|---|---|---|---|---|---|---|---|---|---|---|
| | Time/Minutes | | | | | | | | | | |
| **Sample** | **0** | **5** | **10** | **15** | **20** | **25** | **30** | **35** | **40** | **45** | **50** |
| O | 0 | 50 | 80 | 100 | 100 | 100 | 100 | 100 | 100 | 100 | 100 |
| P | 0 | 100 | 100 | 100 | 100 | 100 | 100 | 100 | 100 | 100 | 100 |
| Q | 0 | 100 | 100 | 100 | 100 | 100 | 100 | 100 | 100 | 100 | 100 |

It is clear from results in P and Q that the imnhomogenaity of the stabilizing aid (B)with the foam control agent is significant with respect to the stabilizing of the foam control agent with time.

**Claims**

**1.** A foam control agent composition comprising

(I) a homogeneous mixture of

(A) an organopolysiloxane of which the siloxane units consist essentially of 0 to 60% of units of the general formula $R_aSiO_{(4-a/2)}$ wherein R denotes a hydrocarbon group having up to 8 carbon atoms and a has a value of from 0 to 3, and 40 to 100% of units of the general formula $R_bR''_cSiO_{(4-b-c/2)}$ wherein R'' denotes a group $-Z_z-R'$, wherein R' denotes an alkyl group having from 9 to 35 carbon atoms, Z denotes a linking group between silicon and R' and *z* has a value of 0 or 1, *b* has a value of 0, 1 or 2, *c* has a value of 1 or 2, and *b*+*c* has a value of 1, 2 or 3, provided more than 70% by weight of the carbon content of the organopolysiloxane is due to the groups R''; and

(B) a stabilizing aid, having a melting point of from about 40 to 80°C, comprising one or more of the group consisting of a fatty acid, a fatty alcohol, and an alkylphosphoric acid of the formula:-

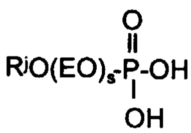

wherein $R^j$ is a linear or branched alkyl or alkenyl group containing from 12 to 24 carbon atoms EO represents ethylene oxide and *s* is zero, 1 or 2; containing

(II)a filler (C ) comprising at least one finely divided hydrophobic particulate material in an amount of from 0.1 to 15 % by weight of (A) + (B) + (C) .

**2.** A foam control agent according to claim 1 characterised in that the stabilising aid (B) comprises stearic acid, palmitic acid and/or myristic acid.

**3.** A foam control agent according to Claim 1 or Claim 2 characterised in that the stabilising aid (B) comprises stearyl alcohol and/or palmityl alcohol.

**4.** A foam control agent according to any of Claims 1 to 3 characterised in that the stabilizing aid (B)comprises an alkylphosphoric acid of the general formula:-

```
                 O
                 ||
CH3(CH2)11-O-P-OH
                 |
                 OH
```

**5.** A foam control agent composition comprising

(I) a homogeneous mixture of

(A) an organopolysiloxane of which the siloxane units consist essentially of 0 to 60% of units of the general formula $R_aSiO_{(4-a/2)}$ wherein R denotes a hydrocarbon group having up to 8 carbon atoms and *a* has a value of from 0 to 3, and 40 to 100% of units of the general formula $R_bR''SiO_{(4-b-c/2)}$ wherein R'' denotes a group $-Z_z-R'$, wherein R' denotes an alkyl group having from 9 to 35 carbon atoms, Z denotes a linking group between silicon and R' and *z* has a value of 0 or 1, *b* has a value of 0, 1 or 2, *c* has a value of 1 or 2, and *b*+*c* has a value of 1, 2 or 3, provided more than 70% by weight of the carbon content of the organopolysiloxane is due to the groups R''; and
(B) a stabilizing aid which is an organic compound having a melting point of from about 40 to 80°C which in its liquid form is miscible with the organopolysiloxane (A) so as to form a homogeneous liquid which upon cooling forms a monophasic waxy substance; containing

(II) a filler (C ) comprising at least one finely divided hydrophobic particulate material in an amount of from 0.1 to 15 % by weight of (A) + (B) + (C) .

**6.** A foam control agent according to any of Claims 1 to 5, characterised in that the organopolysiloxane (A) is a polydiorganosiloxane with the general structure

$$R_bR^\circ{}_cSi\text{-}O\text{-}[RR''Si\text{-}O]_x\text{-}[(R)_2Si\text{-}O]_y\text{-}SiR_b\,R^\circ{}_c$$

wherein R,R'', *b*, *c* and *b* + *c* are as defined in claim 1, R° denotes either a group R or a group R'', and *x* and *y* each independently denote an integer and the total chain length ( *x* + *y* + 2 ) includes from 40 to 500 siloxane units.

**7.** A foam control agent according to any of Claims 1 to 5, characterised in that the organopolysiloxane (A) is a polydiorganosiloxane with the general structure

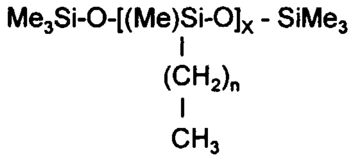

where Me is a methyl group *x* is from 50 to 100 and each *n* is an integer between 9 and 19.

**8.** A foam control agent according to Claim 7, characterised in that the average value of *n* is from 14 to 19.

**9.** A foam control agent according to Claim 7 or 8, characterised in that *x* is from 50 to 70.

**10.** A foam control agent according to any of Claims 1 to 9, characterised in that a petroleum jelly and/or paraffin wax is added to stabilizing aid (B).

**11.** A supported foam control agent comprising a foam control agent and a carrier, characterised in that the foam control agent is in accordance with any of Claims 1 to 10 and the carrier is present in an amount of from 70 to 95% by weight of the supported foam control agent.

**12.** A supported foam control agent according to Claim 11, characterised in that the carrier is selected from the group consisting of sodium sulphate and sodium carbonate.

**13.** A supported foam control agent according to Claim 11 or 12, characterised in that the supported foam control agent is granular.

**14.** A detergent composition in powdered form comprising a detergent and a foam control agent according to any of claims 1 to 10 or supported foam control agent according to any of claims 11 to 13.

**15.** A detergent composition in accordance with claim 14, characterised in that the foam control agent or supported foam control agent is present in an amount of from 0.02 to 25% by weight of the detergent composition.

**16.** A method of preparing a foam control agent in accordance with any one of claims 1 to 10 comprising the following steps;-

i) mixing components (A) and (B) in their liquid form into a homogeneous liquid;
ii) adding component (C ) to either component (A) or (B) before mixing or to the homogeneous liquid during or after step (i), and
iii) enabling the homogeneous liquid resulting from steps (1) and (ii) to cool so that (A) and (B) form a homogeneous solid.

**17.** A method according to Claim 13, characterised in that the homogeneous liquid resulting from steps (i) and (ii) is added to a carrier and granulated.